# EUROPEAN PATENT APPLICATION

(11) **EP 1 275 605 A1**
(43) Date of publication of application: **15.01.2003**
(21) Application number: 01919882.9
(22) Date of filing: 10.04.2001
(51) Int. Cl.: B65G 61/00, G06F 17/60

(54) **PHYSICAL DISTRIBUTION SYSTEM AND PHYSICAL DISTRIBUTION INFORMATION USING METHOD**

(30) Priority: 11.04.2000 JP 2000109010
(71) Applicant: SEIKO EPSON CORPORATION, Tokyo 160-0811 (JP)
(72) Inventor: NAGASAKA, Fumio, c/o SEIKO EPSON CORPORATION, Suwa-shi, Nagano 392-8502 (JP)
(74) Representative: Winter, Brandl, Fürniss, Hübner, Röss, Kaiser, Polte Partnerschaft
(86) International application number: JP0103102
(87) International publication number: WO01076993

(57) **Abstract**

A carrier information terminal 300 includes a tracing module 302 that detects the current position of a transportation medium. In a physical distribution information server 100, an information management module 112 registers and occasionally updates the detected current position in a database 102 as part of physical distribution information. The information management module 112 also registers cargo information input by a shipper into a shipper information terminal 200 and freight information input by a carrier into the carrier information terminal 300 as part of the physical distribution information. The information management module 112 retrieves the physical distribution information to find an address of the shipper with regard to a cargo that satisfies a predetermined condition allowing delivery by the carrier, as well as the current position of the transportation medium by the carrier. Results of the retrieval are processed by an information processing module 114 and are supplied to the carrier information terminal 300 to be displayed.

This arrangement enhances the convenience of all the carrier, the shipper, and the recipient and improves the transportation efficiency of the carrier.

## Description

### Technical Field

The present invention relates to a physical distribution system that utilizes positional information by GPS (Global Positioning System) and thereby enhances an efficiency of transportation.

### Background Art

In a physical distribution system, when a carrier transports a cargo to a remote place, an important issue is to eliminate empty backhauling for the enhanced transportation efficiency. In the case of empty backhauling, the utilization rates of the transportation cost and the transportation time are 50%. Namely the transportation efficiency is 50%. Such a low transportation efficiency is one of greatest factors of poor profitability in physical distribution business.

A proposed technique by some carriers carries a book-type PC (personal computer) and a cellular phone in a truck and gains access to the Internet at the destination to which a cargo is delivered, to find a new shipper.

This technique, however, still has the following problems:
a. It is difficult for a carrier to find any new shipper who is geographically close to the current position of the carrier;
b. It is difficult for a shipper to find the current position of a carrier that satisfies a predetermined condition; and
c. It is difficult for a recipient to find the current location of a cargo being transported to the recipient.

The object of the present invention is thus to solve the problems of the prior art system and to provide a physical distribution system that enhances the convenience of all a carrier, a shipper, and a recipient and improves the transportation efficiency of the carrier.

### Disclosure of the Invention

At least part of the above and the other related objects is attained by a first physical distribution system that transports a cargo from a shipper to a recipient by a transportation medium operated or managed by a carrier. The first physical distribution system includes: a physical distribution information server having a database in which diverse pieces of physical distribution information are stored, an information management module that registers and manages the physical distribution information in the database, and an information processing module that processes the physical distribution information and supplies the processed information to a predetermined information terminal; a carrier information terminal having a tracing module that detects a current position of the transportation medium, a traced position notification module that notifies the detected current position to the physical distribution information server, and a first information notification module that notifies information with regard to a desired cargo input by the carrier to the physical distribution information server; and a shipper information terminal having a second information notification module that notifies information with regard to a cargo of interest input by the shipper to the physical distribution information server and a display unit that is capable of displaying the information supplied from the information processing module. The information management module registers and occasionally updates the current position of the transportation medium notified by the traced position notification module as part of the physical distribution information, and registers the information notified by the first information notification module and the second information notification module as part of the physical distribution information. The information management module retrieves the physical distribution information to find the current position of the transportation medium with regard to a carrier that satisfies a predetermined condition allowing delivery of the shipper's cargo of interest. The information processing module processes information representing a result of the retrieval, supplies the processed information to the shipper information terminal, and causes the processed information to be displayed on the display unit.

In the first physical distribution system of the present invention, the carrier information terminal has the tracing module that detects the current position of the transportation medium. The information management module registers and occasionally updates the detected current position as part of the physical distribution information in the physical distribution information server. The information management module also registers information with regard to a cargo of interest input into the shipper information terminal by the shipper and information with regard to a desired cargo input into the carrier information terminal by the carrier as part of the physical distribution information. The information management module retrieves the physical distribution information to find the current position of the transportation medium with regard to a carrier that satisfies a predetermined condition allowing delivery of the shipper's cargo of interest. The results of the retrieval are processed by the information processing module and are supplied to the shipper information terminal to be displayed on its display unit.

The arrangement of the first physical distribution system thus enables the shipper to readily find the current position of the carrier that satisfies the predetermined condition. This enhances the convenience of the shipper and enables the shipper to entrust a cargo to a desired carrier.

This first concept of the present invention is actualized by a method of utilizing physical distribution information, a physical distribution information server used in the physical distribution system, and a recording medium in which a computer program for constructing such a physical distribution information server is recorded, as well as by the physical distribution system. These applications exert the same effects as those of the first physical distribution system discussed above.

The present invention is also directed to a second physical distribution system that transports a cargo from a shipper to a recipient by a transportation medium operated or managed by a carrier. The second physical distribution system includes: a physical distribution information server having a database in which diverse pieces of physical distribution information are stored, an information management module that registers and manages the physical distribution information in the database, and an information processing module that processes the physical distribution information and supplies the processed information to a predetermined information terminal; a carrier information terminal having a tracing module that detects a current position of the transportation medium, a traced position notification module that notifies the detected current position to the physical distribution information server, a first information notification module that notifies information with regard to a desired cargo input by the carrier to the physical distribution information server, and a display unit that is capable of displaying the information supplied from the information processing module; and a shipper information terminal having a second information notification module that notifies information with regard to a cargo of interest input by the shipper to the physical distribution information server. The information management module registers and occasionally updates the current position of the transportation medium notified by the traced position notification module as part of the physical distribution information, and registers the information notified by the first information notification module and the second information notification module as part of the physical distribution information. The information management module retrieves the physical distribution information to find an address of the shipper with regard to a cargo that satisfies a predetermined condition allowing delivery by the carrier, as well as the current position of the transportation medium. The information processing module processes information representing a result of the retrieval, supplies the processed information to the carrier information terminal, and causes the processed information to be displayed on the display unit.

In the second physical distribution system of the present invention, the carrier information terminal has the tracing module that detects the current position of the transportation medium. The information management module registers and occasionally updates the detected current position as part of the physical distribution information in the physical distribution information server. The information management module also registers information with regard to a cargo of interest input into the shipper information terminal by the shipper and information with regard to a desired cargo input into the carrier information terminal by the carrier as part of the physical distribution information. In the second physical distribution system, the information management module retrieves the physical distribution information to find the address of the shipper with regard to a cargo that satisfies a predetermined condition allowing delivery by the carrier, as well as the current position of the transportation medium by the carrier. The results of the retrieval are processed by the information processing module and are supplied to the carrier information terminal to be displayed on its display unit.

The arrangement of the second physical distribution system enables the carrier to readily find a new shipper who is geographically close to the current position of the carrier at the destination of delivery. This enhances the convenience of the carrier and eliminates empty backhauling, thus improving the driving efficiency.

This second concept of the present invention is actualized by a method of utilizing physical distribution information, a physical distribution information server or a carrier information terminal used in the physical distribution system, and a recording medium in which a computer program for constructing such a physical distribution information server is recorded, as well as by the physical distribution system. These applications exert the same effects as those of the second physical distribution system discussed above.

The present invention is further directed to a third physical distribution system that transports a cargo from a shipper to a recipient by a transportation medium operated or managed by a carrier. The third physical distribution system includes: a physical distribution information server having a database in which diverse pieces of physical distribution information are stored, an information management module that registers and manages the physical distribution information in the database, and an information processing module that processes the physical distribution information and supplies the processed information to a predetermined information terminal; a carrier information terminal having a tracing module that detects a current position of the transportation medium and a traced position notification module that notifies the detected current position to the physical distribution information server; and a specific information terminal having a retrieval demand module that requires the physical distribution information server to retrieve a current location of a cargo being transported by the carrier in response to an instruction given by a specific person other than the carrier, and a display unit that is capable of displaying the information supplied from the information processing module. The information management module registers and occasionally updates the current position of the transportation medium notified by the traced position notification module as part of the physical distribution information. The information management module retrieves the physical distribution information to find the current position of the transportation medium by the carrier in response to the requirement of retrieval from the retrieval demand module. The information processing module processes information representing a result of the retrieval, supplies the processed information to the specific information terminal, and causes the processed information to be displayed on the display unit.

In the third physical distribution system of the present invention, the carrier information terminal has the tracing module that detects the current position of the transportation medium. The information management module registers and occasionally updates the detected current position as part of the physical distribution information in the physical distribution information server. In the third physical distribution system, the information management module retrieves the physical distribution information to find the current position of the transportation medium by the carrier in response to a requirement given by the retrieval demand module of the specific information terminal to retrieve the current location of the cargo being transported by the carrier. The results of the retrieval are processed by the information processing module and are supplied to the specific information terminal to be displayed on its display unit.

The arrangement of the third physical distribution system enables the specific person other than the carrier to continually trace the location of the cargo of interest during transportation. This third concept of the present invention is actualized by a method of utilizing physical distribution information, a physical distribution information server used in the physical distribution system, and a recording medium in which a computer program for constructing such a physical distribution information server is recorded, as well as by the physical distribution system. These applications exert the same effects as those of the third physical distribution system discussed above.

In accordance with one preferable embodiment, the third physical distribution system further includes: a password allocation module that allocates an inquiry password to the specific person; and an accounting module that compares a password input into the specific information terminal by the specific person giving the requirement of retrieval with a password allocated in advance to the specific person and charges the specific person when the two passwords are coincident with each other. The information processing module supplies the processed information regarding the result of the retrieval to the specific information terminal when the two passwords are coincident with each other.

This arrangement allows only the person who has the password to inquire the current location of the cargo, while charging the person for every inquiry about the current location of the cargo.

In the third physical distribution system, it is preferable that the specific person is either the recipient or the shipper.

The recipient and the shipper are those who most strongly desire to trace the cargo during transportation, among all the people who are concerned with the cargo.

The present invention is also directed to a method of remotely managing the above physical distribution information server via a network.

This method enables a domestic computer to readily manage even an overseas physical distribution information server.

### Brief Description of the Drawings

Fig. 1 is a block diagram illustrating the configuration of a physical distribution system in one embodiment of the present invention;
Fig. 2 shows a shipper registration window open on the shipper information terminal 200 shown in Fig. 1;
Fig. 3 is a flowchart showing a physical distribution information utilizing process;
Fig. 4 is a flowchart showing a tracing process routine;
Fig. 5 shows a carrier registration window open on the carrier information terminal 300 shown in Fig. 1;
Fig. 6 shows a shipper information reference window open on the carrier information terminal 300 shown in Fig. 1;
Fig. 7 shows a carrier information reference window open on the shipper information terminal 200;
Fig. 8 is a flowchart showing a subsequent flow of the physical distribution information utilizing process shown in Fig. 3;
Fig. 9 shows a tracing information reference window open on the recipient information terminal 400 shown in Fig. 1;
Fig. 10 is a block diagram illustrating the hardware construction of the physical distribution information server 100 shown in Fig. 1;
Fig. 11 is a block diagram illustrating the hardware construction of the carrier information terminal 300 shown in Fig. 1; and
Fig. 12 is a block diagram illustrating another configuration as a modified example of the physical distribution system of the present invention.

### Best Modes of Carrying Out the Invention

One mode of carrying out the present invention is discussed below as a preferred embodiment in the following sequence:
A. Configuration of Physical Distribution System
B. Operations in Physical Distribution System
   b-1. Registration of Cargo Information
   b-2. Registration of Carrier Information
   b-3. Reference to Shipper Information
   b-4. Reference to Carrier Information
   b-5. Reference to Shipper Information after Transaction
   b-6. Reference to Recipient Information
   b-7. Effect of Embodiment 1
   b-8. Inquiry about Cargo Location
   b-9. Effect of Embodiment 2
C. Hardware Construction of Physical Distribution System
D. Modifications

### A. Configuration of Physical Distribution System

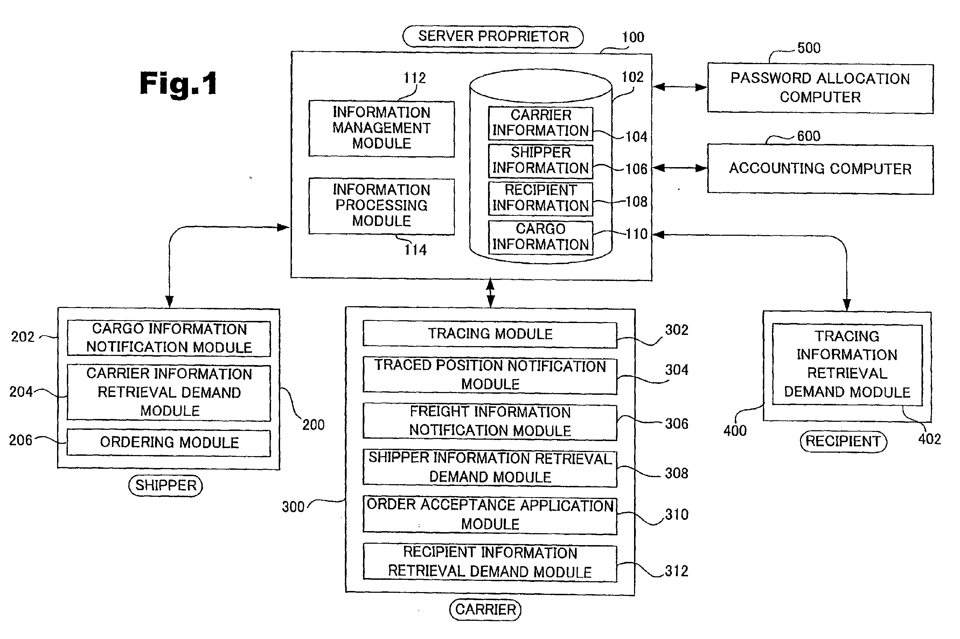

Fig. 1 is a block diagram illustrating the configuration of a physical distribution system in one embodiment of the present invention.

As shown in Fig. 1, the physical distribution system of the embodiment includes a physical distribution information server 100 managed by a server proprietor, a shipper information terminal 200 operated by a shipper, a carrier information terminal 300 operated by a carrier, a recipient information terminal 400 operated by a recipient, a password allocation computer 500 managed by an authenticator, and an accounting computer 600 managed by an account proprietor.

The physical distribution information server 100 is actualized by a general server computer and includes an information management module 112 and an information processing module 114. A database 102 that stores therein various pieces of physical distribution information, such as carrier information 104, shipper information 106, recipient information 108, and cargo information 110, is constructed in a hard disk unit (not shown). The physical distribution information server 100 is connected to the Internet (not shown) via a specific line and opens a Web sight on the Internet with a certain domain name of, for example, 'www.ooooo.com'.

The shipper information terminal 200 and the recipient information terminal 400 are respectively actualized by general PCs (personal computers). The information terminal 200 includes a cargo information notification module 202, a carrier information retrieval demand module 204, and an ordering module 206. The information terminal 400 has a tracing information retrieval demand module 402. Although only one information terminal 200 and one information terminal 400 are illustrated in Fig. 1, multiple information terminals 200 and multiple information terminals 400 are actually included in the physical distribution system and are owned by respective shippers and recipients. Both the information terminals 200 and 400 are connectable to the Internet via a public telephone line or a specific line (not shown).

The carrier information terminal 300 is actualized by a mobile information terminal and includes a tracing module 302, a traced position notification module 304, a freight information notification module 306, a shipper information retrieval demand module 308, an order acceptance application module 310, and a recipient information retrieval demand module 312. The tracing module 302 includes a GPS unit that is capable of detecting the current position by means of the GPS. A typical example applicable for the information terminal 300 is Locatio (trade mark) that includes a GPS unit and is manufactured by SEIKO EPSON CORPORATION. Although only one information terminal 300 is illustrated in Fig. 1, multiple information terminals 300 are actually included in the physical distribution system and are mounted on trucks driven by respective carriers. The information terminal 300 is connectable with the Internet via a wireless telephone line (not shown). On activation, the information terminal 300 immediately connects with the Internet to gain access to the Web site 'www.ooooo.com'.

### B. Operations in Physical Distribution System

### b-1. Registration of Cargo Information

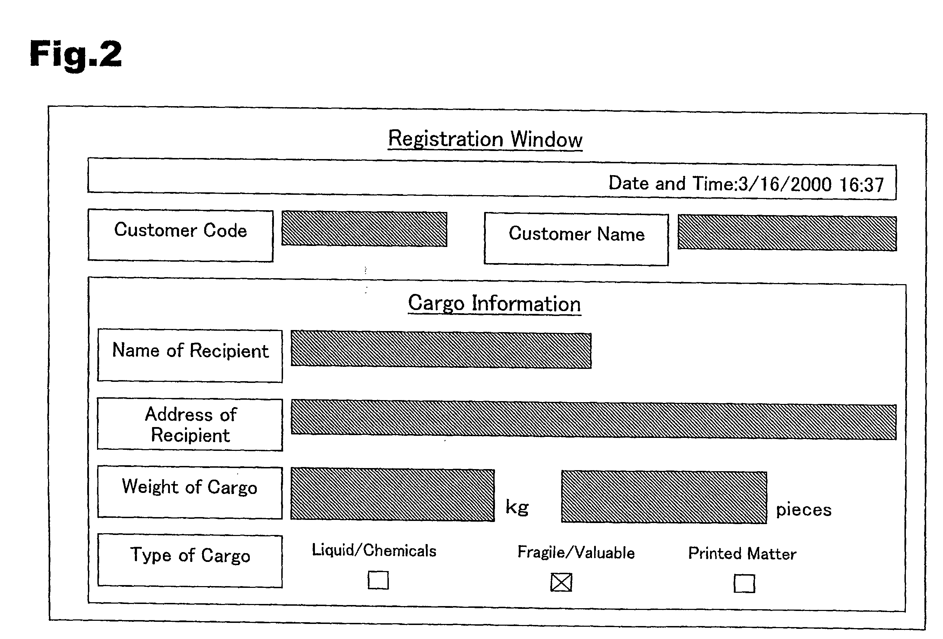

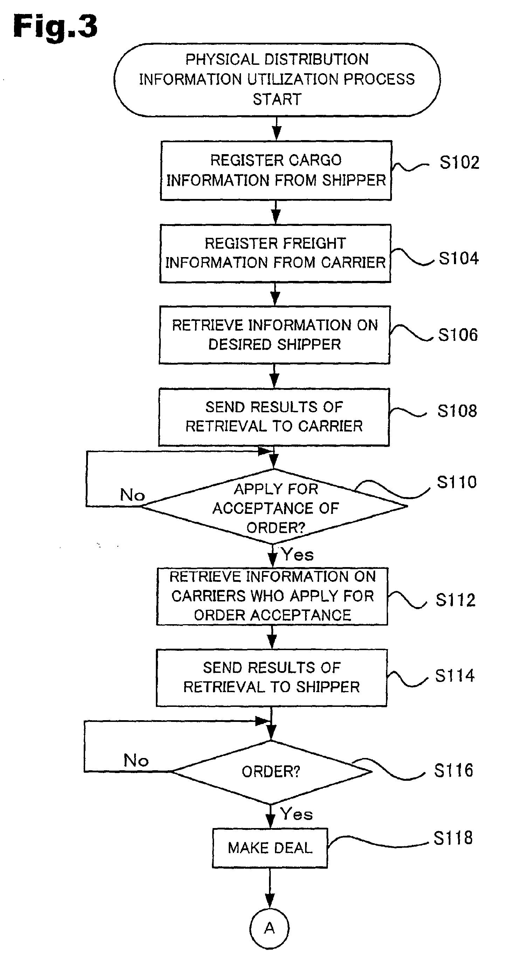

The following describes detailed operations in this embodiment. Fig. 2 shows a shipper registration window open on the shipper information terminal 200 shown in Fig. 1. Fig. 3 is a flowchart showing a physical distribution information utilization process. The shipper uses the information terminal 200 to connect with the Internet and gain access to the Web site 'www.ooooo.com'. A shipper registration window of a Web page as shown in Fig. 2 is then open on a monitor screen (not shown). The shipper inputs a customer code and a customer name as well as cargo information regarding cargo to be transported. More specifically, the shipper inputs the name of destination of the cargo, that is, the name of the recipient, the address of the recipient, the weight of the cargo, and the type of the cargo as the cargo information as shown in Fig. 2. The hatched portions in Fig. 2 represent items to be input.

The input information is notified by the cargo information notification module 202 in the information terminal 200 to the physical distribution information server 100 and is registered as the cargo information 110 into the database 102 by the information management module 112 in the physical distribution information server 100 (step S102).

The information regarding the shipper, for example, the name and the address of the shipper, and the information regarding the recipient, for example, the name and the address of the recipient, are registered in advance as the shipper information 106 and the recipient information 108 in the database 102 by the information management module 112 in the physical distribution information server 100. In response to the registration, the physical distribution information server 100 gives customer codes to the shipper and the recipient. As described above, only the shipper's input of the customer code and the customer name accordingly enables the physical distribution information server 100 to identify the shipper. As discussed later, in a similar manner, only the recipient's input of the customer code and the customer name enables the physical distribution information server 100 to identify the recipient.

The information management module 112 assigns a cargo code to each cargo in the process of registering the cargo information 110, for the purpose of identification of each cargo. The registered cargo information 110 is linked to the shipper information 106 regarding the sender of the cargo and to the recipient information 108 regarding the destination of the cargo.

When the carrier (for example, the driver of a truck) activates the information terminal 300, the information terminal 300 automatically gains access to the Web site 'www.ooooo.com' as mentioned previously.

### b-2. Registration of Carrier Information

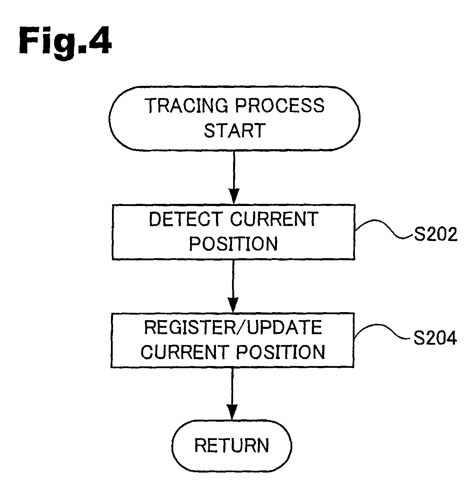

Fig. 4 is a flowchart showing a tracing process routine. The information terminal 300 starts tracing its current position by means of the tracing module 302 including the GPS unit and repeatedly detects the current position at preset time intervals (step S202). The GPS utilizes at least three GPS satellites to catch two different radio waves transmitted from these GPS satellites, and calculates the distances between the GPS unit and the respective GPS satellites, so as to specify the latitude and the longitude of the position where the GPS unit is present as the current positional information. The positional information thus detected is automatically notified to the physical distribution information server 100 by the traced position notification module 304. The notified information is registered as part of the carrier information 104 into the database 102 by the information management module 112 in the physical distribution information server 100 and occasionally updated (step S204). Information regarding the current position of the information terminal 300, that is, the current position of the truck, is registered into the database 102 in the physical distribution information server 100 and occasionally updated without requiring any specific operations of the carrier.

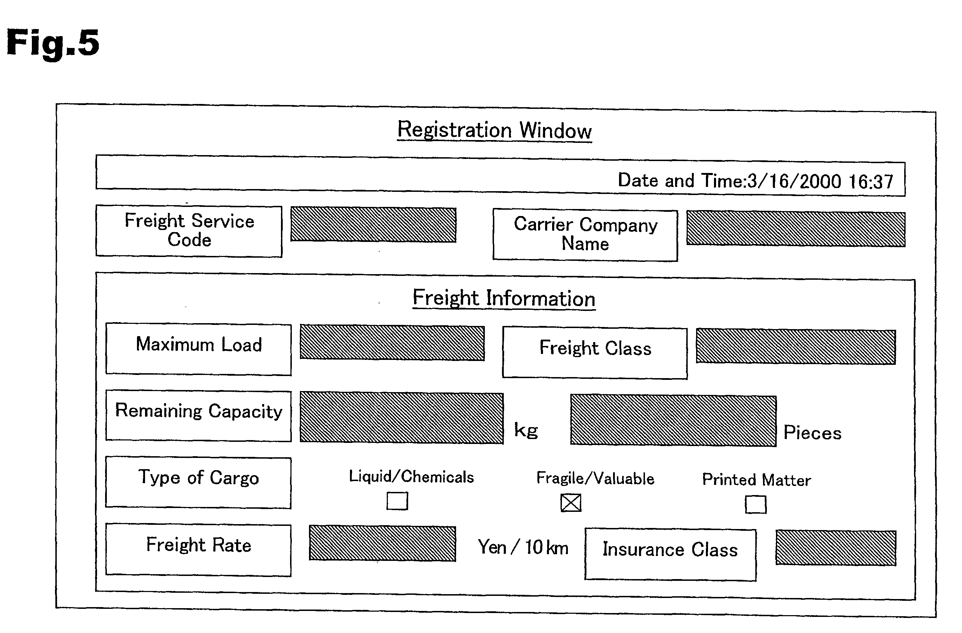

Fig. 5 shows a carrier registration window open on the carrier information terminal 300 shown in Fig. 1. When the truck driven by the carrier is empty backhauling or has the remaining capacity, the carrier registration window of the Web page as shown in Fig. 5 opens on a monitor screen (not shown) and inputs a freight service code assigned to the truck and the name of a carrier company to which the carrier belongs, as well as freight information. The freight information includes, for example, the maximum load of the truck, the freight class of the truck, a remaining capacity of the truck, a desired type of cargo, a desired freight rate, and a class of insurance possibly taken out on the cargo as shown in Fig. 5. The input freight information is transmitted to the physical distribution information server 100 by the freight information notification module 306 in the information terminal 300, and is registered as part of the carrier information 104 into the database 102 by the information management module 112 in the physical distribution information server 100 (step S104 in Fig. 3).

Among the information regarding the carrier, the name and the code of the carrier, the name of the carrier company or shop to which the carrier belongs, the type of the transportation medium (for example, the truck, the van, or the motorbike) driven by the carrier and its vehicle number, and the service district of cargo delivery are registered in advance as part of the carrier information 104 into the database 102 by the information management module 112 in the physical distribution information server 100. The freight service code is notified in advance from the physical distribution information server 100 to each carrier in response to the registration. Only the carrier's input of the freight service code and the name of the carrier company enables the physical distribution information server 100 to identify the carrier.

The preset data, for example, the maximum load of the truck, the freight class, and the freight rate, may be registered together with the name of the carrier. In this application, when the carrier registration window as shown in Fig. 5 is open, the registered data are already written in the corresponding input dialog boxes as initial data. The carrier can thus omit input of such data.

### b-3. Reference to Shipper Information

On conclusion of registration of the freight information by the carrier, the information management module 112 in the physical distribution information server 100 retrieves the cargo information 110 and the linked shipper information 106 based on the registered freight information and the occasionally updated positional information, and obtains information regarding shippers who are located within a predetermined distance from the current position of the truck or information regarding the names and the addresses of shippers who ask for delivery of cargos having the weight of or less than the remaining capacity of the truck and their cargo weights (step S106 in Fig. 3).

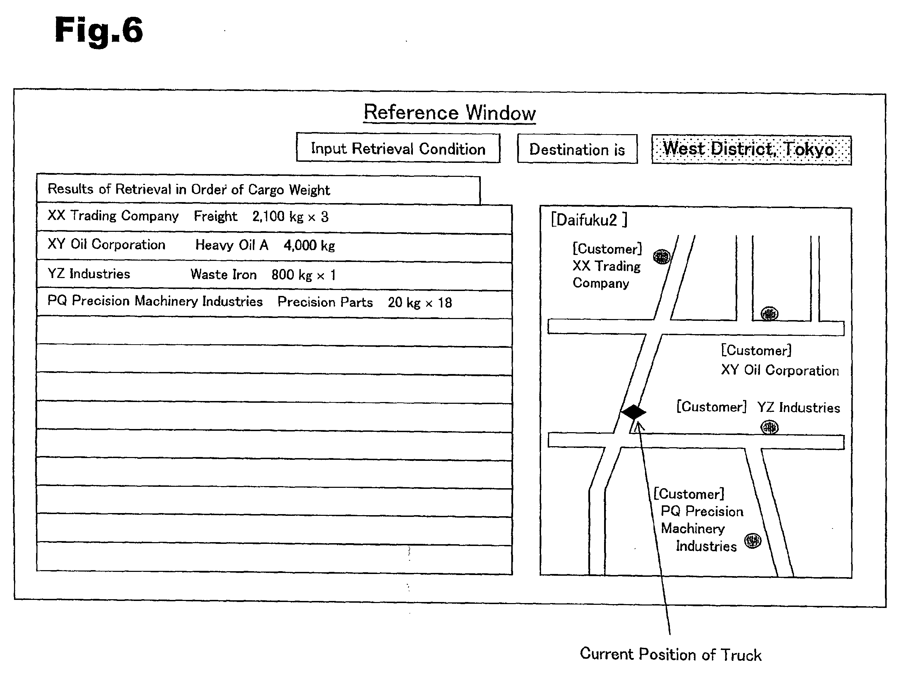

Fig. 6 shows a shipper information reference window open on the carrier information terminal 300 shown in Fig. 1. The results of the retrieval are processed to HTML data by the information processing module 114 and are transmitted from the physical distribution information server 100 to the information terminal 300. The shipper information reference window of the Web page as shown in Fig. 6 is then open on the monitor screen of the information terminal 300 (step S108 in Fig. 3).

The shipper information reference window includes a map on its right side, where information regarding the current position of the truck driven by the carrier and the addresses of shippers geographically close to the current position of the truck is shown. Information regarding the shippers who ask for delivery of cargos having the weight of or less than the remaining capacity of the truck are displayed on the left side of the window in the order of the cargo weight.

For example, it is assumed that the carrier inputs a desired destination 'West District, Tokyo' as a condition of retrieval on the top of the window. The input retrieval condition is transmitted to the physical distribution information server 100 by the shipper information retrieval demand module 308 in the information terminal 300. In the physical distribution information server 100, the information management module 112 carries out detailed retrieval out of the shipper information according to the transmitted retrieval condition and finds shippers satisfying the desired destination 'West District, Tokyo'. The results of the retrieval are also processed to HTML data by the information processing module 114 and transmitted to the information terminal 300 to be reflected on the display on the information terminal 300. Information regarding the shippers satisfying the desired destination 'West District, Tokyo' is then displayed on the shipper information reference window.

The carrier checks the shipper information reference window and further operates the information terminal 300 to select a desired shipper (that is, a shipper who orders delivery of a desired cargo) among the displayed shippers and apply for acceptance of the order (step S110 in Fig. 3). The order acceptance information is transmitted to the physical distribution information server 100 by the order acceptance application module 310.

In the physical distribution information server 100, the information management module 112 rearranges the order acceptance information transmitted from the respective carriers, retrieves information of the carriers who have applied for acceptance of the order out of the carrier information 104 with regard to each shipper, and obtains the names of the carrier companies, the truck numbers, and the current positions fo the trucks (step S112 in Fig. 3).

### b-4. Reference to Carrier Information

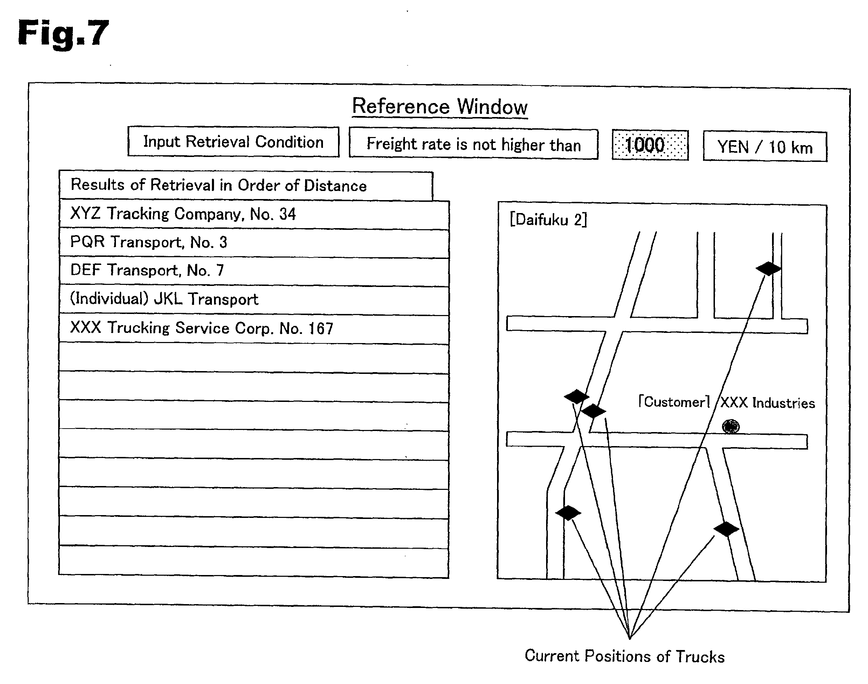

Fig. 7 shows a carrier information reference window open on the shipper information terminal 200. The results of the retrieval are processed to HTML data by the information processing module 114 and transmitted from the physical distribution information server 100 to the information terminal 200 of each shipper. The carrier information reference window as shown in Fig. 7 is then open on the monitor screen of the shipper information terminal 200.

The carrier information reference window includes a map on its right side, where the address of the shipper and the current positions of the trucks driven by the respective carriers who have applied for delivery of the shipper's cargo are shown. The names of the carrier companies to which the carriers who have applied belong and the truck numbers are shown on the left side of the window in the order of the distance geographically closer to the address of the shipper.

When the shipper wants to entrust delivery of the cargo to the carrier who is currently closest to the shipper's address, the shipper further operates the information terminal 200t o select the closest carrier among all the displayed carriers (in the example of Fig. 7, the carrier 'XYZ Trucking Company, No. 34') and send an order (step S116 in Fig. 3).

When the shipper wants to designate a carrier with the lowest freight rate, the shipper inputs a desired freight rate, for example, 'freight rate of not higher than 1000 Yen/ 10 km', as a condition of retrieval on the window. The input retrieval condition is transmitted to the physical distribution information server 100 by the carrier information retrieval demand module 204 in the information terminal 200. In the physical distribution information server 100, the information management module 112 carries out detailed retrieval among the carriers who have applied for acceptance of the order according to the transmitted retrieval condition and finds the carriers satisfying the 'freight rate of not higher than 1000 Yen per 10 km'. The results of the retrieval are processed to HTML data by the information processing module 114 and transmitted to the information terminal 200 to be reflected on the display on the information terminal 200. Namely only the information regarding carriers satisfying the 'freight rate of not higher than 1000 Yen per 10 km' is displayed on the carrier information reference window. The shipper checks the display on the carrier information reference window and operates the information terminal 200 to select the carrier with the lowest freight rate and send an order (step S116 in Fig. 3). The order information input by the shipper is transmitted to the physical distribution information server 100 by the ordering module 206 in the information terminal 200.

When receiving the transmitted order information, the physical distribution information server 100 regards that a deal is made between the shipper and the selected carrier (step S118 in Fig. 3). The information management module 112 notifies the deal to the carrier information terminal 300. The information management module 112 then links the cargo information 110 regarding the cargo of interest with the carrier information 104 regarding the selected carrier.

### b-5. Reference to Shipper Information after Transaction

When the carrier information terminal 300 receives the notification, the shipper information retrieval demand module 308 outputs a requirement to the physical distribution information server 100 to retrieve information of the shipper that has just made the deal. In the physical distribution information server 100, the information management module 112 obtains information of the shipper out of the shipper information 106 in response to the requirement of retrieval. The resulting information is processed to HTML data by the information processing module 114 and transmitted to the information terminal 300 to be reflected on the display on the information terminal 300. Only the information of the shipper is accordingly displayed in the shipper information reference window, and a route from the current position of the truck to the address of the shipper is displayed in the map on the right side of the window. The carrier checks the shipper information reference window while driving the truck, so as to reach the address of the shipper straight and receive the cargo.

### b-6. Reference to Recipient Information

When the carrier inputs a predetermined instruction into the information terminal 300 after receiving the cargo from the shipper, the recipient information retrieval demand module 312 outputs a requirement to the physical distribution information server 100 to retrieve information of the recipient as the destination of the cargo. In the physical distribution information server 100, the information management module 112 retrieves information of the recipient out of the recipient information 108. The results of the retrieval are processed to HTML data by the information processing module 114 and transmitted to the information terminal 300. The display on the monitor screen of the information terminal 300 is changed to a recipient information reference window (not shown), which displays information of the recipient as the destination of the cargo. For example, the window includes a map showing the route from the current position of the truck to the address of the recipient. The carrier drives the truck while checking the map. This arrangement ensures smooth delivery of the cargo to the address of the recipient.

In the case where the information terminal 300 has the car navigation function or the information terminal 300 is communicable with a car navigation system mounted on the truck, the car navigation function may be used to guide the route to the address of the shipper or the address of the recipient, based on the information on the current position detected by the tracing module 302 in the information terminal 300.

### b-7. Effect of Embodiment 1

The physical distribution system of the embodiment enables the carrier who has just delivered a cargo to readily find a new shipper who is geographically close to the current position. This application eliminates empty backhauling and enhances the transportation efficiency. The physical distribution system of the embodiment also enables the shipper to readily check the carriers satisfying the required condition with their current positions and entrust a cargo to a desired carrier.

### b-8. Inquiry about Cargo Location

When it is regarded that a deal is made between the shipper and the carrier, the information management module 112 of the physical distribution information server 100 reads the customer code of the recipient who is expected to receive the cargo out of the recipient information 108 linked with the cargo information 110 and sends the customer code and requirement of allocation of a password to the password allocation computer 500.

The information of the recipient is stored in advance as a customer information record in both the password allocation computer 500 and the accounting computer 600. The customer information record includes, for example, 'customer code', 'name', 'address', 'telephone number', 'e-mail address', 'electronic settlement bank account number' (or 'credit card number' and 'expiration date'), 'current inquiry password', 'log file management number', 'customer district number', and 'other shop management information'.

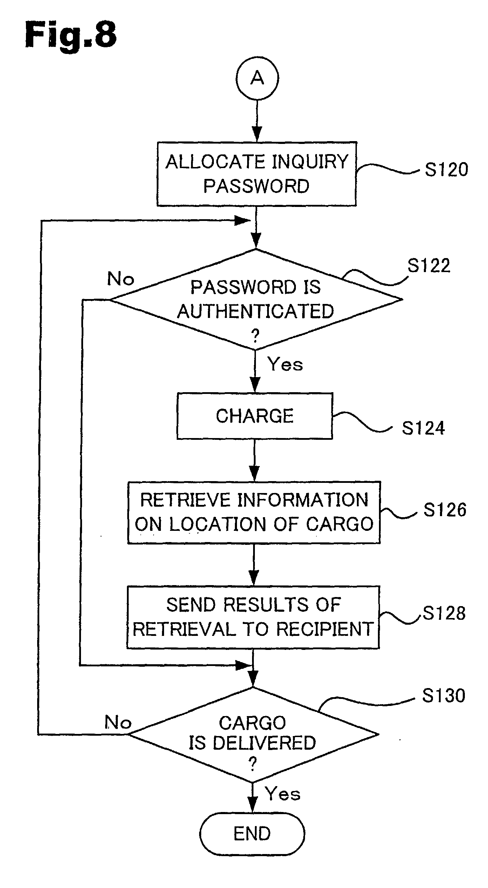

Fig. 8 is a flowchart showing a subsequent flow of the physical distribution information utilization process shown in Fig. 3. The password allocation computer 500 generates an inquiry password including 6 to 10 arbitrary alphabets in response to a password allocation requirement and sends the generated inquiry password to the physical distribution information server 100 (step S120). The password allocation computer 500 also reads the customer information record of the corresponding recipient based on the transmitted customer code and updates the 'current inquiry password' in the customer information record to the newly generated inquiry password.

The information management module 112 of the physical distribution information server 100 transmits the inquiry password sent from the password allocation computer 500 and a cargo code assigned to the cargo to be transported to the recipient information terminal 400, for example, by means of e-mail. The information management module 112 also transmits the inquiry password and the customer code of the recipient to the accounting computer 600. The accounting computer 600 reads the customer information record of the corresponding recipient based on the transmitted customer code and updates the 'current inquiry password' in the customer information record to the newly generated inquiry password.

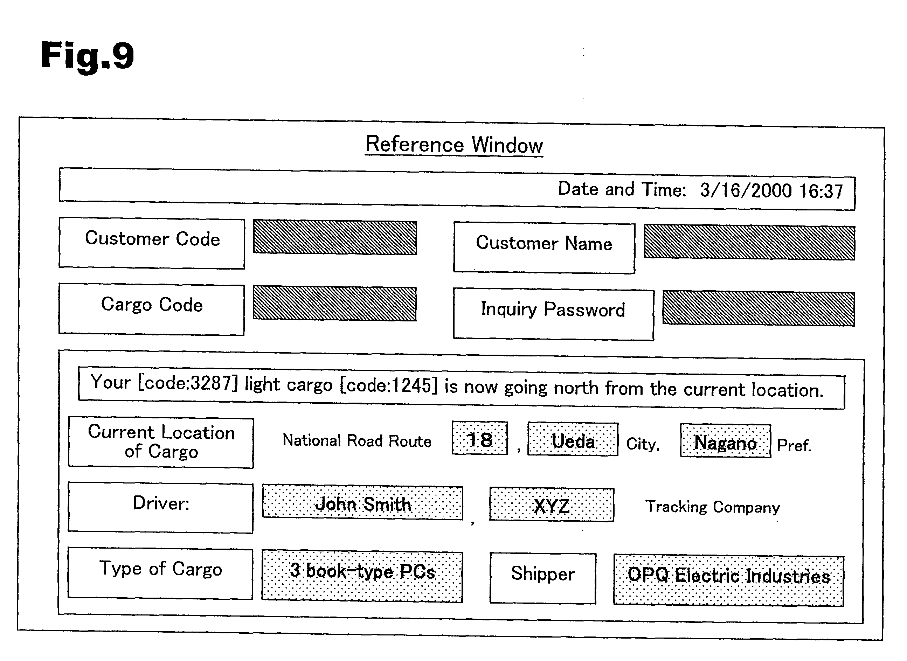

The recipient who has received the inquiry password and the cargo code can anytime inquire the location of the cargo being transported. Fig. 9 shows a tracing information reference window open on the recipient information terminal 400 shown in Fig. 1. In order to trace the cargo being transported, the recipient uses the information terminal 400 to connect with the Internet and access the Web site 'www.ooooo.com'. The tracing information reference window of the Web page as shown in Fig. 9 is then open on the monitor screen. The recipient inputs the customer code the customer name as well as the cargo code and the inquiry password sent from the physical distribution information server 100. The input information is transmitted to the physical distribution information server 100 by the tracing information retrieval demand module 402.

In the physical distribution information server 100, the information management module 112 sends the customer code and the inquiry password among the transmitted information to the accounting computer 600. The accounting computer 600 reads the customer information record based on the transmitted customer code and compares the transmitted inquiry password with the registered 'current inquiry password' for authentication (step S122 in Fig. 8). When the transmitted password is coincident with the registered password, the accounting computer 600 refers to the 'log file management number' in the customer information record, opens a log file describing history information of the recipient, and updates a corresponding field. The accounting computer 600 also refers to the 'electronic settlement bank account number' (or the 'credit card number' and the 'expiration date') in the customer information record and charges for inquiry of the cargo location (step S124). On conclusion of the accounting with regard to the recipient, the accounting computer 600 notifies the concluded accounting to the physical distribution information server 100.

When the physical distribution information server 100 receives the notification, the information management module 112 retrieves the cargo information 110 and the linked carrier information 104 based on the cargo code transmitted from the information terminal 400 and obtains the current location of the cargo from the traced position of the truck which is transporting the cargo (step S126). The results of the retrieval are processed to HTML data by the information processing module 114 and transmitted to the information terminal 300 to be reflected on the display on the information terminal 400 (step S128). As shown in Fig. 9, the current location of the cargo being transported is displayed together with the name of the carrier, the type of the cargo, and the name of the shipper on the tracing information reference window.

The above process of inquiry about the cargo location is executed every time the recipient gains access to the Web site 'www.ooooo.com' and inputs the password and the other required data. The recipient is charged for every inquiry about the cargo location. The inquiry about the cargo location is allowed until the cargo is actually distributed to the recipient (step S130).

### b-9. Effect of Embodiment 2

The physical distribution system of the embodiment enables the recipient to continually trace the cargo, which is being transported to the recipient.

In the above description, the recipient inquires the cargo location. Inquiry about the cargo location is, however, not restricted to the recipient. For example, the shipper who has entrusted the cargo to the carrier may demand trace of the cargo being transported, in order to confirm the successful distribution of the cargo to the recipient. In another example, a third party who is concerned with the cargo being transported, for example, an insurance company taking insurance of the cargo, may demand trace of the cargo, in order to confirm the successful distribution of the cargo to the recipient. In such cases, the inquiry about the cargo location may be allowed to the shipper or the third party concerned.

### C. Hardware Construction of Physical Distribution System

The following briefly describes the hardware construction of the physical distribution information server 100 and the respective information terminals 200, 300, and 400 included in the physical distribution system of the embodiment.

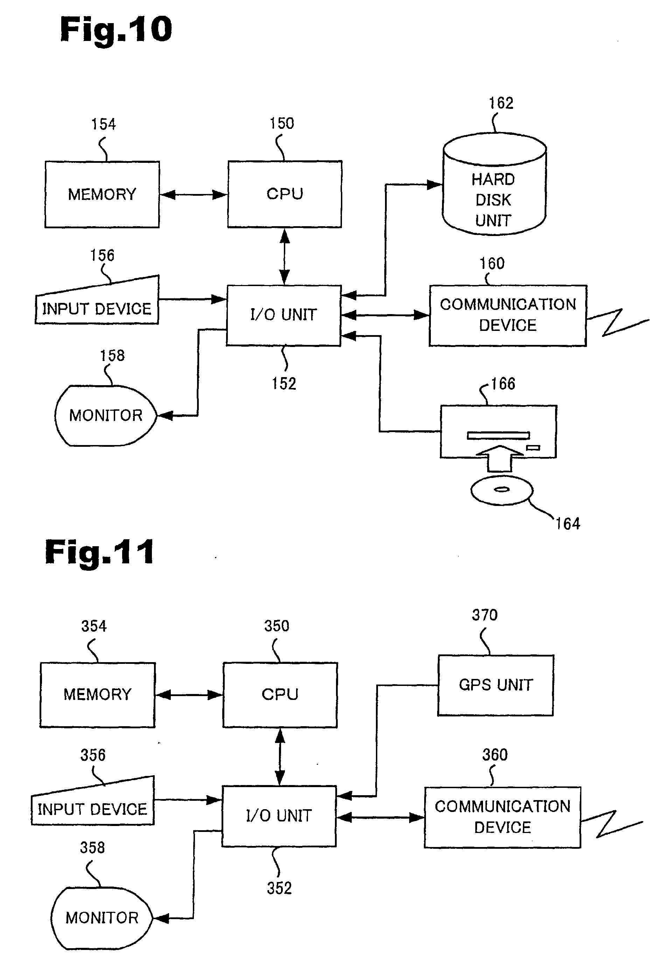

Fig. 10 is a block diagram illustrating the hardware construction of the physical distribution information server 100 shown in Fig. 1. As mentioned previously, the physical distribution information server 100 is actualized by a general server computer. As shown in Fig. 10, the physical distribution information server 100 includes a CPU 150 that carries out diverse processes and controls according to computer programs, an I/O unit 152 that takes charge of transmission of data to and from various peripheral equipment, a memory 154 that stores therein the computer programs and data obtained by the processing, and an input device 156, such as a keyboard, a mouse, and a tablet, that receives user's instructions. The physical distribution information server 100 also includes a monitor 158, such as a CRT and a liquid crystal display, that displays the details of data, a communication device 160, such as a modem, a terminal adapter, and a network card, that communicates with other apparatuses and devices via the network, a hard disk unit 162 that stores therein various pieces of information, and a CD-ROM drive unit 166 that reads a CD-ROM 164 in which the computer program is written.

The database 102 discussed previously is constructed in the hard disk unit 162. The CPU 150 reads and executes the computer programs stored in the memory 154, so as to exert the functions of the information management module 112 and the information processing module 114.

In this embodiment, the computer program stored in the memory 154 is read from the CD-ROM 164 as a recording medium into the physical distribution information server 100 by the CD-ROM drive unit 166. The input computer program is transferred to the hard disk unit 162 and further to the memory 154, for example, at the time of activation. The input computer program may alternatively be transferred to the memory 154 not via the hard disk unit 162 but directly.

The structure of this embodiment utilizes the CD-ROM as the 'recording medium' in which the computer program is recorded in a computer readable manner. Other available examples of the recording medium include flexible disks, magneto-optic discs, IC cards, ROM cartridges, punched cards, prints with barcodes or other codes printed thereon, internal storage devices (memories like a RAM and a ROM) and external storage devices of the computer, and a variety of other computer readable media.

Means of supplying the computer programs is, however, not restricted to such recording media. Another application gains access to a program server (not shown) that supplies computer programs via the network and takes the computer programs into the physical distribution information server 100.

Part of the computer programs may be attained by an operating system program.

Although the information management module 112 and the information processing module 114 are attained by the software in this embodiment, these modules 112 and 114 may be actualized by the hardware elements.

The shipper information terminal 200 and the recipient information terminal 400 are actualized by general PCs as mentioned above and basically have the similar construction to that of the server computer shown in Fig. 10. In the information terminal 200, the CPU 150 reads and executes the computer programs stored in the memory 154, so as to exert the functions of the cargo information notification module 202, the carrier information retrieval demand module 204, and the ordering module 206 discussed above. In the information terminal 400, the CPU 150 reads and executes the computer program stored in the memory 154, so as to exert the functions of the tracing information retrieval demand module 402 discussed above.

Fig. 11 is a block diagram illustrating the hardware construction of the carrier information terminal 300 shown in Fig. 1. The carrier information terminal 300 is actualized by a mobile information terminal as mentioned previously and includes a CPU 350, an I/O unit 352, a memory 354, an input device 356, a monitor 358, a communication device 360, and a GPS unit 370 as shown in Fig. 11.

The CPU 350 reads and executes the computer programs stored in the memory 354, so as to exert the functions of the traced position notification module 304, the freight information notification module 306, the shipper information retrieval demand module 308, the order acceptance application module 310, and the recipient information retrieval demand module 312, as well as the function of the tracing module 302 in cooperation with the GPS unit 370.

In this embodiment, the information is supplied mainly in the form of HTML data from the information processing module 114 of the physical distribution information server 100 to the respective information terminals 200, 300, and 400. Activation of a Web browser program as one of the computer programs causes each window of the Web page discussed above to be open on each of the information terminals 200, 300, and 400, based on the HTML data. The HTML data supplied from the physical distribution information server 100 has a mechanism f calling software components to utilize the functions on the physical distribution information server 100 called CGI (Common Gateway Interface). This mechanism is used for retrieval of the database in the physical distribution information server 100 in response to a requirement from each information terminal.

The physical distribution information server 100 may be located in any place including overseas as long as the server 100 is connected to the Internet. In such cases, a management computer located at a domestic site logs in the physical distribution information server 100 via the Internet and remotely controls the physical distribution information server 100. This ensures remote management of the physical distribution information server 100.

### D. Modifications

The present invention is not restricted to the above embodiment or its applications, but there may be many other modifications, changes, and alterations without departing from the scope or spirit of the main characteristics of the present invention.

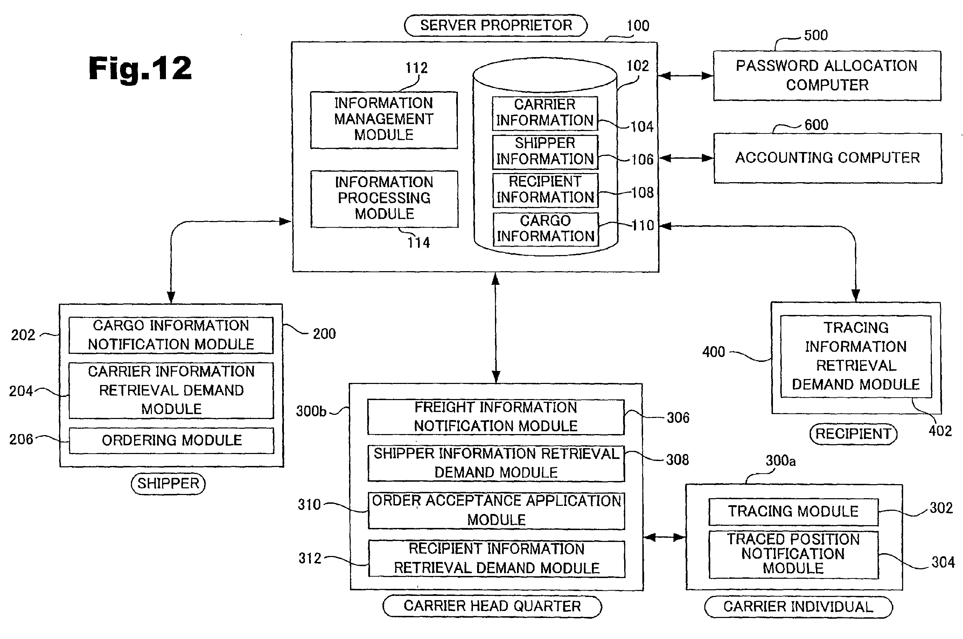

In the embodiment discussed above, the carrier information terminal 300 is mounted on the truck driven by the carrier and includes the tracing module 302, the traced position notification module 304, the freight information notification module 306, the shipper information retrieval demand module 308, the order acceptance application module 310, and the recipient information retrieval demand module 312. The technique of the present invention is, however, not restricted to this application. For example, each carrier may be a member of a carrier company or a carrier organization. In the case where the head quarter of the carrier company or the carrier organization manages individual member carriers, the functions of the carrier information terminal 300 may be divided into a carrier individual and a carrier head quarter. Such modification is discussed below with Fig. 12.

Fig. 12 is a block diagram illustrating another configuration as a modified example of the physical distribution system of the present invention. In the example of Fig. 12, a carrier individual information terminal 300a includes only the tracing module 302 and the traced position notification module 304 and is mounted on the truck driven by each carrier individual. A carrier head quarter information terminal 300b has the other functions, that is, the freight information notification module 306, the shipper information retrieval demand module 308, the order acceptance application module 310, and the recipient information retrieval demand module 312 and is installed in the head quarter of the carrier company or the carrier organization.

The hardware construction of the carrier individual information terminal 300a is identical with the hardware construction shown in Fig. 11. The hardware construction of the carrier head quarter information terminal 300b is similar to the hardware construction shown in Fig. 11, except the absence of the GPS unit 370.

In the carrier individual information terminal 300a mounted on each truck, the tracing module 302 including the GPS unit 370 detects its current position at preset time intervals, and the traced position notification module 304 notifies the detected positional information to the physical distribution information server 100 via the carrier head quarter information terminal 300b installed in the head quarter of the carrier.

The head quarter uses the carrier head quarter information terminal 300b and comprehensively performs notification of the freight information, requirement of retrieval of the shipper information, application of order acceptance, and requirement of retrieval of the recipient information with regard to each truck to the physical distribution information server 100, in place of each carrier individual.

The information received from the physical distribution information server 100 in response to such performance and instructions from the head quarter based on the received information are transmitted from the carrier head quarter information terminal 300b to the carrier individual information terminal 300a and notified to the carrier individual according to the requirements.

This modified application enables the carrier head quarter to comprehensively manage the carrier business of the respective carrier individuals, while effectively relieving the load of the respective carrier individuals.

The carrier individual information terminal 300a may further include any or all of the freight information notification module 306, the shipper information retrieval demand module 308, the order acceptance application module 310, and the recipient information retrieval demand module 312, in addition to the tracing module 302 and the traced position notification module 304. The carrier head quarter information terminal 300b is not required to include all the freight information notification module 306, the shipper information retrieval demand module 308, the order acceptance application module 310, and the recipient information retrieval demand module 312, but may have at least one of such functions.

The carrier head quarter carries out the notification and the requirement to the physical distribution information server 100, in place of the respective carrier individuals. The carrier individual is thus hardly required to input the information and the instructions into the carrier individual information terminal 300a. The input device 356 may accordingly be omitted from the hardware construction of the carrier individual information terminal 300a.

In the case where the carrier individual information terminal 300a does not have any output device like a monitor and is not capable of outputting the information and the instructions transmitted from the head quarter, such information and instructions may separately be transmitted from the carrier head quarter to each carrier individual with a walkie-talkie or a cellular phone.

The positional information detected by the carrier individual information terminal 300a may be notified to the physical distribution information server 100 not via the carrier head quarter information terminal 300b but directly.

The physical distribution information server 100 is actualized by a server computer in the above embodiment, but may be constructed by a general PC or a mobile computer. Each information terminal actualized by a general PC or a mobile information terminal in the above embodiment may be constructed by any of a mobile computer, a hand-held computer, a game equipment having the computer functions, a set top box, a mail receiver and transmitter terminal, and a cellular phone.

The carrier information terminal 300 includes the GPS unit in the above embodiment. The GPS unit may be outside the casing of the information terminal 300 and connected to the casing directly or via a connection cord.

In the above embodiment, the physical distribution information server 100 and the respective information terminals are connected to the Internet as a computer network. Another computer network, for example, an Intranet, a Local Area Network (LAN), or a Wide Area Network (WAN) may be used instead of the Internet.

In the embodiment discussed above, the physical distribution information server 100, the password allocation computer 500, and the accounting computer 600 are constructed as separate constituents. AT least two of these constituents may be combined and actualized by one computer.

In the embodiment discussed above, the trucks are used as the transportation media for transporting cargos. The transportation media are, however, not restricted to the trucks, but may be vans, motorbikes, bicycles, ships, and helicopters. When the motorbike or bicycle is used as the transportation medium, the carrier information terminal 300 may not be mounted directly on the transportation medium. In such cases, the carrier carries the information terminal 300 and rides the motorbike or bicycle. This means that the information terminal 300 is indirectly mounted on the motorbike or the bicycle. The carrier may carry the information terminal 300 in any transportation medium other than the motorbike and the bicycle. Industrial Applicability

As described above, the physical distribution system of the present invention is effectively used in the carrier business that transports various cargos with transportation media like trucks.

## Claims

1. A physical distribution system that transports a cargo from a shipper to a recipient by a transportation medium operated or managed by a carrier, the physical distribution system comprising:
a physical distribution information server having a database in which diverse pieces of physical distribution information are stored, an information management module that registers and manages the physical distribution information in the database, and an information processing module that processes the physical distribution information and supplies the processed information to a predetermined information terminal;
a carrier information terminal having a tracing module that detects a current position of the transportation medium, a traced position notification module that notifies the detected current position to the physical distribution information server, and a first information notification module that notifies information with regard to a desired cargo input by the carrier to the physical distribution information server; and
a shipper information terminal having a second information notification module that notifies information with regard to a cargo of interest input by the shipper to the physical distribution information server and a display unit that is capable of displaying the information supplied from the information processing module,
wherein the information management module registers and occasionally updates the current position of the transportation medium notified by the traced position notification module as part of the physical distribution information, and registers the information notified by the first information notification module and the second information notification module as part of the physical distribution information,
the information management module retrieves the physical distribution information to find the current position of the transportation medium with regard to a carrier that satisfies a predetermined condition allowing delivery of the shipper's cargo of interest,
the information processing module processes information representing a result of the retrieval, supplies the processed information to the shipper information terminal, and causes the processed information to be displayed on the display unit.

2. A physical distribution system that transports a cargo from a shipper to a recipient by a transportation medium operated or managed by a carrier, the physical distribution system comprising:
a physical distribution information server having a database in which diverse pieces of physical distribution information are stored, an information management module that registers and manages the physical distribution information in the database, and an information processing module that processes the physical distribution information and supplies the processed information to a predetermined information terminal;
a carrier information terminal having a tracing module that detects a current position of the transportation medium, a traced position notification module that notifies the detected current position to the physical distribution information server, a first information notification module that notifies information with regard to a desired cargo input by the carrier to the physical distribution information server, and a display unit that is capable of displaying the information supplied from the information processing module; and
a shipper information terminal having a second information notification module that notifies information with regard to a cargo of interest input by the shipper to the physical distribution information server,
wherein the information management module registers and occasionally updates the current position of the transportation medium notified by the traced position notification module as part of the physical distribution information, and registers the information notified by the first information notification module and the second information notification module as part of the physical distribution information,
the information management module retrieves the physical distribution information to find an address of the shipper with regard to a cargo that satisfies a predetermined condition allowing delivery by the carrier, as well as the current position of the transportation medium,
the information processing module processes information representing a result of the retrieval, supplies the processed information to the carrier information terminal, and causes the processed information to be displayed on the display unit.

3. A physical distribution system that transports a cargo from a shipper to a recipient by a transportation medium operated or managed by a carrier, the physical distribution system comprising:
a physical distribution information server having a database in which diverse pieces of physical distribution information are stored, an information management module that registers and manages the physical distribution information in the database, and an information processing module that processes the physical distribution information and supplies the processed information to a predetermined information terminal;
a carrier information terminal having a tracing module that detects a current position of the transportation medium and a traced position notification module that notifies the detected current position to the physical distribution information server; and
a specific information terminal having a retrieval demand module that requires the physical distribution information server to retrieve a current location of a cargo being transported by the carrier in response to an instruction given by a specific person other than the carrier, and a display unit that is capable of displaying the information supplied from the information processing module,
wherein the information management module registers and occasionally updates the current position of the transportation medium notified by the traced position notification module as part of the physical distribution information,
the information management module retrieves the physical distribution information to find the current position of the transportation medium by the carrier in response to the requirement of retrieval from the retrieval demand module,
the information processing module processes information representing a result of the retrieval, supplies the processed information to the specific information terminal, and causes the processed information to be displayed on the display unit.

4. A physical distribution system in accordance with any one of claims 1 to 3, wherein the carrier information terminal is mounted on the transportation medium.

5. A physical distribution system in accordance with any one of claims 1 to 3, wherein the carrier information terminal has a first section and a second section that is separate from the first section, and
the first section includes at least the tracing module and the traced position notification module and is mounted on the transportation medium.

6. A physical distribution system in accordance with claim 3, the physical distribution system further comprising:
a password allocation module that allocates an inquiry password to the specific person; and
an accounting module that compares a password input into the specific information terminal by the specific person giving the requirement of retrieval with a password allocated in advance to the specific person and charges the specific person when the two passwords are coincident with each other,
wherein the information processing module supplies the processed information regarding the result of the retrieval to the specific information terminal when the two passwords are coincident with each other.

7. A physical distribution system in accordance with either one of claims 3 and 6, wherein the specific person is either one of the recipient and the shipper.

8. A method of utilizing physical distribution information in the process of transporting a cargo from a shipper to a recipient by a transportation medium operated or managed by a carrier, the method comprising the steps of:
(a) detecting a current position of the transportation medium;
(b) registering and occasionally updating the detected current position of the transportation medium as part of the physical distribution information;
(c) registering information with regard to a desired cargo that the carrier wants to transport, as part of the physical distribution information;
(d) registering information with regard to a cargo of interest that the shipper requires transportation, as part of the physical distribution information;
(e) retrieving the physical distribution information to find the current position of the transportation medium with regard to a carrier that satisfies a predetermined condition allowing delivery of the shipper's cargo of interest; and
(f) supplying information representing a result of the retrieval to the shipper.

9. A method of utilizing physical distribution information in the process of transporting a cargo from a shipper to a recipient by a transportation medium operated or managed by a carrier, the method comprising the steps of:
(a) detecting a current position of the transportation medium;
(b) registering and occasionally updating the detected current position of the transportation medium as part of the physical distribution information;
(c) registering information with regard to a desired cargo that the carrier wants to transport, as part of the physical distribution information;
(d) registering information with regard to a cargo of interest that the shipper requires transportation, as part of the physical distribution information;
(e) retrieving the physical distribution information to find an address of the shipper with regard to a cargo that satisfies a predetermined condition allowing delivery by the carrier, as well as the current position of the transportation medium by the carrier; and
(f) supplying information representing a result of the retrieval to the carrier.

10. A method of utilizing physical distribution information in the process of transporting a cargo from a shipper to a recipient by a transportation medium operated or managed by a carrier, the method comprising the steps of
(a) detecting a current position of the transportation medium;
(b) registering and occasionally updating the detected current position of the transportation medium as part of the physical distribution information;
(c) retrieving the physical distribution information to find the current position of the transportation medium by the carrier in response to a requirement given by a specific person other than the carrier to retrieve a current location of a cargo being transported by the carrier; and
(d) supplying information representing a result of the retrieval to the specific person.

11. A physical distribution information server used in a physical distribution system that transports a cargo from a shipper to a recipient by a transportation medium operated or managed by a carrier, the physical distribution information server comprising:
a database in which diverse pieces of physical distribution information are stored;
an information management module that registers and manages the physical distribution information in the database; and
an information processing module that processes the physical distribution information and supplies the processed information,
wherein the information management module registers and occasionally updates a current position of the transportation medium notified by the carrier as part of the physical distribution information, and registers information with regard to a desired cargo notified by the carrier and information with regard to a cargo of interest notified by the shipper as part of the physical distribution information,
the information management module retrieves the physical distribution information to find the current position of the transportation medium with regard to a carrier that satisfies a predetermined condition allowing delivery of the shipper's cargo of interest,
the information processing module processes information representing a result of the retrieval and supplies the processed information to the shipper.

12. A physical distribution information server used in a physical distribution system that transports a cargo from a shipper to a recipient by a transportation medium operated or managed by a carrier, the physical distribution information server comprising:
a database in which diverse pieces of physical distribution information are stored;
an information management module that registers and manages the physical distribution information in the database; and
an information processing module that processes the physical distribution information and supplies the processed information,
wherein the information management module registers and occasionally updates a current position of the transportation medium notified by the carrier as part of the physical distribution information, and registers information with regard to a desired cargo notified by the carrier and information with regard to a cargo of interest notified by the shipper as part of the physical distribution information,
the information management module retrieves the physical distribution information to find an address of the shipper with regard to a cargo that satisfies a predetermined condition allowing delivery by the carrier, as well as the current position of the transportation medium by the carrier,
the information processing module processes information representing a result of the retrieval and supplies the processed information to the carrier.

13. A physical distribution information server used in a physical distribution system that transports a cargo from a shipper to a recipient by a transportation medium operated or managed by a carrier, the physical distribution information server comprising:
a database in which diverse pieces of physical distribution information are stored;
an information management module that registers and manages the physical distribution information in the database; and
an information processing module that processes the physical distribution information and supplies the processed information,
wherein the information management module registers and occasionally updates a current position of the transportation medium notified by the carrier as part of the physical distribution information,
the information management module retrieves the physical distribution information to find the current position of the transportation medium by the carrier in response to a requirement given by a specific person other than the carrier to retrieve a current location of a cargo being transported by the carrier,
the information processing module processes information representing a result of the retrieval and supplies the processed information to the specific person.

14. A method of remotely managing a physical distribution information server in accordance with any one of claims 11 through 13 via a network.

15. A carrier information terminal used in a physical distribution system that transports a cargo from a shipper to a recipient by a transportation medium operated or managed by a carrier, the carrier information terminal comprising:
a tracing module that detects a current position of the transportation medium;
a traced position notification module that notifies the detected current position to a server used in the physical distribution system;
an information notification module that notifies information with regard to a desired cargo input by the carrier to the server; and
a display unit that displays an address of the shipper with regard to a cargo that satisfies a predetermined condition allowing delivery by the carrier as well as the current position of the transportation medium by the carrier, based on the information supplied from the server.

16. A carrier information terminal in accordance with claim 15, the carrier information terminal is mounted on the transportation medium.

17. A carrier information terminal in accordance with claim 15, the carrier information terminal having a first section and a second section that is separate from the first section,
wherein the first section includes at least the tracing module and the traced position notification module and is mounted on the transportation medium.

18. A computer readable recording medium in which a computer program for supplying various pieces of physical distribution information stored in a database is recorded, the computer program causing a computer to attain the functions of:
registering and occasionally updating a current position of a transportation medium operated or managed by a carrier, which is notified by the carrier, in the database as part of the physical distribution information, and registering information with regard to a desired cargo, which is notified by the carrier, and information with regard to a cargo of interest, which is notified by a shipper, as part of the physical distribution information;
retrieving the physical distribution information to find the current position of the transportation medium with regard to a carrier that satisfies a predetermined condition allowing delivery of the shipper's cargo of interest; and
processing information representing a result of the retrieval and supplying the processed information to the shipper.

19. A computer readable recording medium in which a computer program for supplying various pieces of physical distribution information stored in a database is recorded, the computer program causing a computer to attain the functions of:
registering and occasionally updating a current position of a transportation medium operated or managed by a carrier, which is notified by the carrier, in the database as part of the physical distribution information, and registering information with regard to a desired cargo, which is notified by the carrier, and information with regard to a cargo of interest, which is notified by a shipper, as part of the physical distribution information;
retrieving the physical distribution information to find an address of the shipper with regard to a cargo that satisfies a predetermined condition allowing delivery by the carrier, as well as the current position of the transportation medium by the carrier; and
processing information representing a result of the retrieval and supplying the processed information to the carrier.

20. A computer readable recording medium in which a computer program for supplying various pieces of physical distribution information stored in a database is recorded, the computer program causing a computer to attain the functions of:
registering and occasionally updating a current position of a transportation medium operated or managed by a carrier, which is notified by the carrier, in the database as part of the physical distribution information;
retrieving the physical distribution information to find the current position of the transportation medium by the carrier in response to a requirement given by a specific person other than the carrier to retrieve a current location of a cargo being transported by the carrier; and
processing information representing a result of the retrieval and supplying the processed information to the specific person.
